# EUROPÄISCHE PATENTANMELDUNG

(11) **EP 3 330 651 A1**
(43) Veröffentlichungstag der Anmeldung: **06.06.2018**
(21) Anmeldenummer: 17204653.4
(22) Anmeldetag: 30.11.2017
(51) Int. Cl.: F25D 23/06, F16L 59/065

(54) **KÜHL- UND/ODER GEFRIERGERÄT**

(30) Priorität: 30.11.2016 DE 102016014278; 16.11.2017 DE 102017126984
(71) Anmelder: Liebherr-Hausgeräte Lienz GmbH, 9900 Lienz (AT)
(72) Erfinder: ZOIER, Dipl.-Ing. Hans, 9907 Tristach (AT); KÖFELE, Markus, 9961 Hopfgarten (AT)
(74) Vertreter: Herrmann, Uwe

(57) **Zusammenfassung**

Kühl- und/oder Gefriergerät mit einem Innenbehälter, einem Außenbehälter und einer dazwischen angeordneten Isolationsschicht, die eine sich durchgehend über zwei oder mehrere Behälterwände erstreckende Vakuumdämmung aufweist, wobei die Vakuumdämmung durch zweidimensionale Vakuumpaneele gebildet wird, die an gemeinsamen Seitenkanten verbunden und zu einem dreidimensionalen Verbund gefaltet sind.

## Beschreibung

Die Erfindung betrifft ein Kühl- und/oder Gefriergerät mit einem Innenbehälter, einem Außenbehälter und einer dazwischen angeordneten Isolationsschicht, die eine sich durchgehend über zwei oder mehrere Behälterwände erstreckende Vakuumdämmung aufweist. Die Erfindung betrifft ferner ein Verfahren zur Herstellung eines derartigen Kühl- und/oder Gefriergeräts.

Es wurde in der Vergangenheit immer wieder überlegt, Kühl- und/oder Gefriergeräte mit einer Vollvakuumdämmung herzustellen, die sich durchgehend und im Wesentlichen vollflächig über alle Behälterwände erstreckt. Auf weitere Dämmelemente kann verzichtet werden. Der Herstellungsprozess eines dreidimensionalen Vollvakuumgehäuses ist aber technisch anspruchsvoll und kostenintensiv. Daher sind Haushaltsgeräte mit Vollvakuumdämmung derzeit nicht im Einsatz. Bisher wurden lediglich einzelne Vakuumisolationspaneele im Verbund mit anderen Materialien, beispielsweise Wärmeisolationsschaum zur Verbesserung der Isolationseigenschaften eingesetzt.

Aufgabe der Erfindung ist es, ein Kühl- und/oder Gefriergerät bereitzustellen, das eine Vollvakuumdämmung aufweist und einfacher herzustellen ist als bekannte Geräte.

Diese Aufgabe wird erfindungsgemäß gelöst durch ein Kühl- und/oder Gefriergerät mit einem Innenbehälter, einem Außenbehälter und einer dazwischen angeordneten Isolationsschicht, die eine sich durchgehend über zwei oder mehrere Behälterwände erstreckende Vakuumdämmung aufweist, wobei die Vakuumdämmung durch zweidimensionale Vakuumpaneele gebildet wird, die an gemeinsamen Seitenkanten verbunden und zu einem dreidimensionalen Verbund gefaltet sind. Die Paneele des Verbunds stehen vorzugsweise im rechten Winkel zueinander. Bei der Vakuumdämmung handelt es sich vorzugsweise um eine sogenannte Vollvakuumdämmung, die sich durchgehend und im Wesentlichen vollflächig über alle Behälterwände erstreckt. Es ist denkbar, dass das Gerät lediglich diese Vakuumdämmung und keine weiteren Dämmelemente umfasst.

In einer Ausführungsform sind die Paneele des Verbundes mit dem Innenbehälter und/oder dem Außenbehälter des Gerätes verklebt.

In einer Ausführungsform ist vorgesehen, dass die Vakuumpaneele einen evakuierten Kern mit einem Stützmaterial und ein diesen Kern umgebendes Hüllmaterial aufweisen, wobei die benachbarten Vakuumpaneele durch eine Fügung der Hüllmaterialien an der gemeinsamen Seitenkante miteinander verbunden sind, wobei es sich bei dem Hüllmaterial vorzugsweise um eine Kunststofffolie handelt. Geeignete Kunststofffolien umfassen beispielsweise Polyethylen-Folien. Es kann vorgesehen sein, dass die Kunststofffolie des Hüllmaterials metallisiert ist, um eine höhere Gasdichtigkeit zu erreichen. Geeignete Stützmaterialien umfassen beispielsweise Schüttungen aus partikulären Materialien, offenporige Schäume oder Faserplatten.

In einer Ausführungsform ist vorgesehen, dass die Hüllmaterialien an der gemeinsamen Seitenkante verschweißt sind. Geeignete Prozesse zur Herstellung einer derartigen Schweißverbindung umfassen beispielsweise Press-, Ultraschall- oder thermisches Schweißen.

In einer Ausführungsform ist vorgesehen, dass im Bereich der Verbindung zwischen den benachbarten Vakuumpaneelen Strömungskanäle vorgesehen sind, welche die evakuierten Kerne der benachbarten Vakuumpaneele verbinden. Alternativ kann auch vorgesehen sein, dass die evakuierten Kerne aller Vakuumisolationspaneele geschlossen sind. Dies ist insbesondere dann sinnvoll, wenn keines der Vakuumisolationspaneele eine derartige Schnittstelle aufweist, sondern wenn die Paneele bereits in der Fertigung, vorzugsweise vor der Verbindung vollständig evakuiert werden.

In einer Ausführungsform ist vorgesehen, dass zumindest ein oder genau ein Vakuumisolationspaneel eine Schnittstelle zum Anlegen eines externen Vakuums aufweist. Dies hat im Zusammenspiel mit etwaigen Strömungskanälen den Vorteil, dass die Kerne mehrerer oder aller Vakuumisolationspaneele des Verbunds gemeinsam evakuiert werden können. Dies ist insbesondere sinnvoll, wenn zumindest ein oder genau ein Vakuumisolationspaneel eine Schnittstelle zum Anlegen eines externen Vakuums aufweist.

In einer Ausführungsform ist vorgesehen, dass im evakuierten Kern wenigstens eines Vakuumisolationspaneels eine Wärmepumpe angeordnet ist, die ein thermoelektrisches Element und wenigstens ein Wärmeleitelement umfasst und sich zwischen den gegenüberliegenden Oberflächen des Paneels erstreckt, wobei vorzugsweise vorgesehen ist, dass ein thermoelektrisches Element zwischen zwei Wärmeleitelementen angeordnet ist, die mit der Umhüllung an den gegenüberliegenden Oberflächen in Kontakt stehen. Eine Wärmeleitung zwischen den Wärmeleitelementen und außerhalb des Paneels angeordneten Wärmetauschern kann durch die dünne Umhüllung hindurch erfolgen, beispielsweise wenn die Außenseite der Umhüllung an der betreffenden Stelle direkt an dem Wärmetauscher anliegt oder mit diesem verklebt ist. Im einfachsten Fall können der Innen- und/oder der Außenbehälter des Gerätes als Wärmetauscher dienen.

In einer Ausführungsform ist vorgesehen, dass in der Umhüllung des wenigstens einen Vakuumisolationspaneels eine Durchführung vorgesehen ist, wobei ferner eine mit dem thermoelektrischen Element verbundene elektrische Leitung vorgesehen ist, die durch diese Durchführung nach außen verläuft. Die Durchführung ist luftundurchlässig ausgebildet, was durch eine luftdichte Einfassung der elektrischen Leitung und, sofern die Durchführung nicht als bloßer Durchbruch sondern als separates Bauteil gestaltet ist, eine luftdichte Verbindung mit der Umhüllung erreicht wird.

In einer Ausführungsform ist vorgesehen, dass die Vakuumpaneele zumindest an den einem benachbarten Vakuumpaneel zugewandten Seitenkanten abgeschrägt sind. Eine derartige Gehrung am Rand der Vakuumisolationspaneele führt dazu, dass diese einfacher gegeneinander geschwenkt werden können, um den dreidimensionalen Verbund auszubilden. Ferner hat eine derartige Gehrung den Vorteil, dass an den entsprechenden Kanten die Kontaktfläche der Paneele erhöht werden kann, was dazu beiträgt, zu vermeiden, dass an den Kanten ein Schwachpunkt in der Isolierung entsteht.

Bei dem erfindungsgemäßen Kühl- und/oder Gefriergerät handelt es sich vorzugsweise um ein aktiv gekühltes Haushaltskältegerät.

Vor dem eingangs genannten Hintergrund betrifft die Erfindung ferner ein Verfahren zur Herstellung eines erfindungsgemäßen Kühl- und/oder Gefriergeräts, wobei mehrere zweidimensionale Vakuumisolationspaneele bereitgestellt und nebeneinander angeordnet werden und wobei benachbarte Vakuumpaneele an gemeinsamen Seitenkanten miteinander verbunden werden. Der Verbund und die Paneele können so ausgebildet sein, wie dies im Zusammenhang mit den einzelnen Ausführungsformen des erfindungsgemäßen Kühl- und/oder Gefriergeräts beschrieben wurde.

In einer Ausführungsform erfolgt die Verbindung durch ein Schweißverfahren, beispielsweise durch Press-, Ultraschall- oder thermisches Schweißen.

Die Verbindung der Paneele kann erfolgen, wenn sie in einer Ebene nebeneinander liegen, oder sie kann erfolgen, wenn sie bereits im Winkel zueinander stehen. Auch eine Kombination dieser Varianten ist möglich, d.h., manche Verbindungen können geformt werden, wenn die Paneele in einer Ebene nebeneinander liegen, und die verbleibenden Verbindungen können geformt werden, wenn die Paneele bereits im Winkel zueinander stehen.

In einer Ausführungsform ist vorgesehen, dass die Vakuumpaneele im zumindest teilweise miteinander verbundenen Zustand entlang der verbundenen Seitenkanten zum dem dreidimensionalen Verbund gefaltet werden. In einer Ausführungsform werden die Paneele des Verbundes vor oder nach der Verbindung oder auch nach einer teilweisen Verbindung mit dem Innenbehälter und/oder dem Außenbehälter des Gerätes verklebt. In einer Ausführungsform werden die Paneele des Verbundes vor oder nach dem Falten mit dem Innenbehälter und/oder dem Außenbehälter des Gerätes verklebt.

In einer Ausführungsform werden die Kerne aller Vakuumisolationspaneele vor deren Verbindung und Faltung vollständig evakuiert. Dies kann insbesondere dann vorgesehen sein, wenn zwischen den Paneelen keine Luftströmungskanäle vorgesehen sind.

In einer anderen Ausführungsform sind die Paneele vor der Verbindung nicht oder nicht vollständig evakuiert und werden erst nach der Verbindung und/oder Faltung evakuiert oder vollständig evakuiert. Dies kann insbesondere dann vorgesehen sein, wenn zwischen den Paneelen Luftströmungskanäle vorgesehen sind und zumindest ein Paneel eine Schnittstelle zum Anlegen eines externen Vakuums aufweist.

Dies hat im Zusammenspiel mit etwaigen Strömungskanälen den Vorteil, dass die Kerne mehrerer oder aller Vakuumisolationspaneele des Verbunds gemeinsam evakuiert werden können. Dies ist insbesondere sinnvoll, wenn zumindest ein oder genau ein Vakuumisolationspaneel eine Schnittstelle zum Anlegen eines externen Vakuums aufweist.

Weitere Einzelheiten und Vorteile der Erfindung ergeben sich aus dem nachfolgend anhand der Figuren beschriebenen Ausführungsbeispiel. In den Figuren zeigen:
- Figur 1:: eine Draufsicht auf einen zweidimensionalen Verbund mehrerer Vakuumpaneele;
- Figur 2:: eine perspektivische Ansicht dieses zweidimensionalen Verbundes;
- Figur 3:: eine perspektivische Ansicht des durch Falten des zweidimensionalen Verbundes entstandenen dreidimensionalen Verbundes; und
- Figuren 4a-4c:: weitere Ansichten des zweidimensionalen Verbundes mehrerer Vakuumpaneele

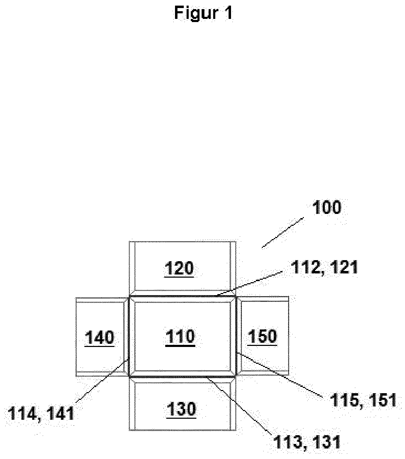

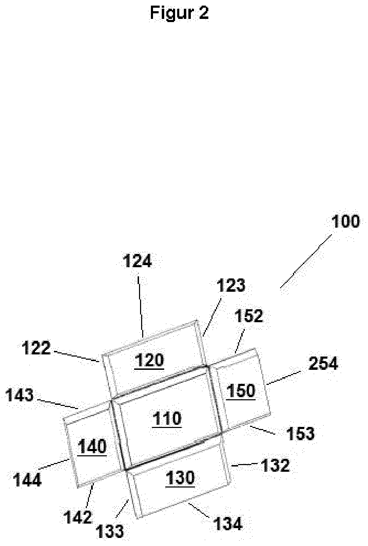

In den Figuren 1 und 2 wird ein zweidimensionaler Verbund aus fünf plattenförmigen Vakuumisolationspaneelen gezeigt, der allgemein mit dem Bezugszeichen 100 gekennzeichnet ist. Die einzelnen Paneele des Verbunds sind mit den Bezugszeichen 110, 120, 130, 140 und 150 gekennzeichnet. Sie sind alle rechteckig ausgebildet. Es gibt ein zentrales Paneel 110, das an allen seinen vier Seitenkanten 112 bis 115 mit einem angrenzenden Paneel 120, 130, 140 und 150 verbunden ist, das sich jeweils über die gesamte Länge der Seitenkante 112 bis 115 erstreckt. Das zentrale Paneel 110 stellt das größte Paneel dar. Die angrenzenden Paneele 120 bis 150 weisen alle dieselbe Breite auf, sodass die Paneele 120 und 130, die mit den langen Kanten 112 und 113 des zentralen Paneels 110 verbunden sind, flächenmäßig größer sind als die Paneele 140 und 150, die mit den kurzen Kanten 114 und 115 des zentralen Paneels 110 verbunden sind.

Alle Seitenkanten 112 bis 115 des zentralen Paneels 110 sind abgeschrägt. Dasselbe gilt für die mit diesen Kanten 112 bis 115 verbundenen Seitenkanten 121, 131, 141 und 151 der angrenzenden Paneele 120, 130, 140 und 150. Auch diejenigen Seitenkanten 122, 123, 132, 133, 142, 143, 152 und 153 der angrenzenden Paneele 120, 130, 140 und 150, die eine Verlängerung der Seitenkanten 112 bis 115 darstellen, sind ebenfalls abgeschrägt. Lediglich die dem zentralen Paneel 110 gegenüberliegenden Seitenkanten 124, 134, 144 und 154 der angrenzenden Paneele 120, 130, 140 und 150 sind nicht abgeschrägt sondern gerade ausgeführt.

Die Paneele 110, 120, 130, 140 und 150 sind allesamt identisch aufgebaut. Sie weisen einen plattenförmigen Stützkern aus einer Schüttung von körnigem Material wie beispielsweise Perlit auf, der beidseitig mit einem Blatt metallisierter Polyethylen-Kunststofffolie überzogen ist. Die Blätter sind an allen vier Enden miteinander luftdicht verbunden, sodass der Stützkern luftdicht eingeschlossen wird.

Die Verbindung der Paneele 110, 120, 130, 140 und 150 an den benachbarten Seitenkanten erfolgt über das Hüllmaterial. Überstände des Hüllmaterials werden dabei in einem Fügeprozess miteinander verbunden, beispielsweise anhand einer Stoßverbindung. Die Verbindung über das Hüllmaterial ermöglicht eine weitgehend luftdichte Fügeverbindung, welche nur in den Eckbereichen offen ist.

Es kann vorgesehen sein, dass die Paneele 110, 120, 130, 140 und 150 vor dem Verbindungsprozess bereits fertig evakuiert sind, vor dem Verbindungsprozess vorevakuiert werden, bis Formstabilität gegeben ist, oder erst im Verbund nachträglich evakuiert werden. Die Verbindung über das Hüllmaterial kann entweder dicht ausgeführt werden oder es können Strömungskanäle offen gelassen werden. Bei einer dichten Ausführung können bzw. müssen alle Elemente einzeln evakuiert werden. Bei einer Ausführung mit Strömungskanälen an den Verbindungsstellen kann über einen gemeinsamen Vakuumieranschluss der gesamte Verbund evakuiert werden.

Die einzelnen Paneele 110, 120, 130, 140 und 150 können eines oder mehrere Peltierelemente mit Wärmetauschern enthalten. Die Paneele mit Peltierelement und Wärmetauschern verfügen dann über eine oder mehrere elektrische Durchführung durch das Hüllmaterial.

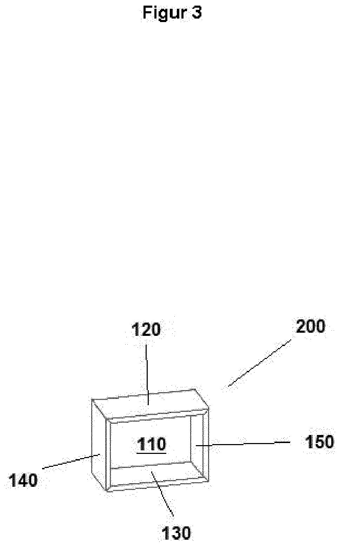

Der Verbund 100 der Figuren 2 und 3 wird dann zu einem dreidimensionalen Verbund 200 gefaltet, der in Figur 3 gezeigt ist. Dieser Verbund 200 hat die Form eines Gerätekorpus eines Kühl- und/oder Gefriergerätes mit einer größeren Breite als Höhe. Dabei entspricht das zentrale Paneel 110 der Behälterrückwand, die an deren kurzen Kanten angeordneten Paneele 140 und 150 entsprechen den Seitenwänden und die an deren langen Kanten angeordneten Paneele 120 und 130 entsprechen dem Boden bzw. der Decke. Nach dem Falten liegen nun auch die abgeschrägten, aber im zweidimensionalen Verbund 100 noch nicht verbundenen Kanten 122, 123, 132, 133, 142, 143, 152 und 153 jeweils einer anderen Kante gegenüber. Diese gegenüberliegenden Kanten werden nun in derselben Weise miteinander verbunden, wie die bereits im zweidimensionalen Verbund 100 verbundenen Kanten.

Der dreidimensionale Verbund 200 kann mit einem Innen- und/oder Außenbehälter eines Kühl- und/oder Gefriergerätes verbunden werden, beispielsweise anhand einer klebenden Verbindungsschicht. Sofern in den Paneelen Peltierelemente vorhanden sind, können der Innen- und/oder Außenbehälter als passive oder aktive Wärmetauscher für eines oder mehrere der Peltierelemente dienen.

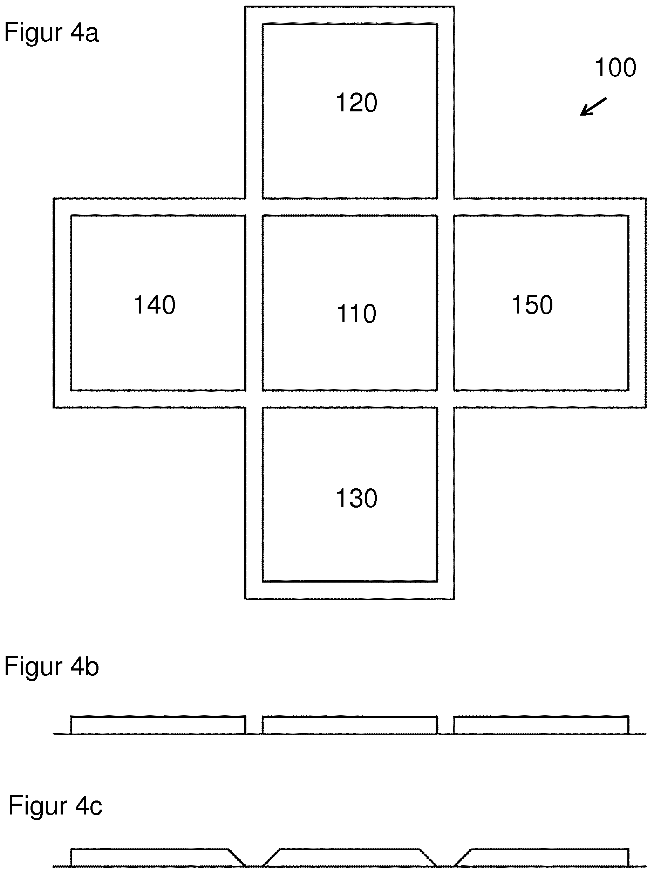

Figuren 4a bis 4c zeigen den zweidimensionaler Verbund 100 aus fünf plattenförmigen Vakuumisolationspaneelen 110, 120, 130, 140 und 150 in weiteren Perspektiven. Die darin offenbarten Merkmale entsprechen im Wesentlichen den bereits geschilderten.

Wie besonders Figuren 4b und 4c entnehmbar ist, können die in den Figuren 1 und 2 gezeigten Seitenkanten 112 bis 115 sowie 122, 123, 132, 133, 142, 143, 152 und 153 der Paneele 110, 120, 130, 140 und 150 abgeschrägt oder rechtwinklig angeordnet sein.

Das erfindungsgemäße Kühl- und/oder Gefriergerät weist den Vorteil auf, dass dessen 2D-Bauteile bzw. die die Vakuumdämmung bildenden Vakuumisolationspaneele 110, 120, 130, 140 und 150 einfacher gefertigt werden können. Ferner wird eine einfachere geometrische Gestaltung ermöglicht, bei der die Kerbengeometrie ideal ausgeführt sein muss. Andernfalls kann entweder ein Formfehler des Gehäuses oder eine Schwachstelle der Dämmung in deren Eckbereichen vorliegen. Die erfindungsgemäße Vakuumdämmung weist Fügestellen auf, deren Großteil bereits nach dem Fügen gasdicht ist. Prinzipiell sind nur die 4 Eckbereiche gasdurchlässig. Auch kann bei einer Ausführung des Kühlund/oder Gefriergeräts ohne Verbindungskanal zwischen den einzelnen Vakuumisolationspaneelen ein Austausch eines einzelnen Vakuumisolationspaneels dadurch einfach ermöglicht werden, dass vor bzw. von einer Siegelnaht eines Nachbarpaneels die Folie abgeschnitten wird. Um wieder gasdicht zum Innenraum zu sein, muss dann eine Reparaturlösung die gasdichte Verbindung ersetzten.

## Patentansprüche

1. Kühl- und/oder Gefriergerät mit einem Innenbehälter, einem Außenbehälter und einer dazwischen angeordneten Isolationsschicht, die eine sich durchgehend über zwei oder mehrere Behälterwände erstreckende Vakuumdämmung aufweist,
**dadurch gekennzeichnet,**
**dass** die Vakuumdämmung durch zweidimensionale Vakuumpaneele gebildet wird, die an gemeinsamen Seitenkanten verbunden und zu einem dreidimensionalen Verbund gefaltet sind.

2. Kühl- und/oder Gefriergerät nach Anspruch 1, **dadurch gekennzeichnet, dass** die Vakuumpaneele einen evakuierten Kern mit einem Stützmaterial und ein diesen Kern umgebendes Hüllmaterial aufweisen, wobei die benachbarten Vakuumpaneele durch eine Fügung der Hüllmaterialien an der gemeinsamen Seitenkante miteinander verbunden sind, wobei es sich bei dem Hüllmaterial vorzugsweise um eine Kunststofffolie handelt.

3. Kühl- und/oder Gefriergerät nach Anspruch 2, **dadurch gekennzeichnet, dass** die Hüllmaterialien an der gemeinsamen Seitenkante verschweißt sind.

4. Kühl- und/oder Gefriergerät nach einem der vorhergehenden Ansprüche, **dadurch gekennzeichnet, dass** im Bereich der Verbindung zwischen den benachbarten Vakuumpaneelen Strömungskanäle vorgesehen sind, welche die evakuierten Kerne der benachbarten Vakuumpaneele verbinden.

5. Kühl- und/oder Gefriergerät nach einem der vorhergehenden Ansprüche, **dadurch gekennzeichnet, dass** zumindest ein oder genau ein Vakuumisolationspaneel eine Schnittstelle zum Anlegen eines externen Vakuums aufweist.

6. Kühl- und/oder Gefriergerät nach einem der vorhergehenden Ansprüche, **dadurch gekennzeichnet, dass** im evakuierten Kern wenigstens eines Vakuumisolationspaneels eine Wärmepumpe angeordnet ist, die ein thermoelektrisches Element und wenigstens ein Wärmeleitelement umfasst und sich zwischen den gegenüberliegenden Oberflächen des Paneels erstreckt, wobei vorzugsweise vorgesehen ist, dass ein thermoelektrisches Element zwischen zwei Wärmeleitelementen angeordnet ist, die mit der Umhüllung an den gegenüberliegenden Oberflächen in Kontakt stehen.

7. Kühl- und/oder Gefriergerät nach Anspruch 6, **dadurch gekennzeichnet, dass** in der Umhüllung des wenigstens einen Vakuumisolationspaneels eine Durchführung vorgesehen ist, wobei ferner eine mit dem thermoelektrischen Element verbundene elektrische Leitung vorgesehen ist, die durch diese Durchführung nach außen verläuft.

8. Kühl- und/oder Gefriergerät nach einem der vorhergehenden Ansprüche, **dadurch gekennzeichnet, dass** die Vakuumpaneele zumindest an den einem benachbarten Vakuumpaneel zugewandten Seitenkanten abgeschrägt sind.

9. Verfahren zur Herstellung eines Kühl- und/oder Gefriergeräts nach einem der vorhergehenden Ansprüche,
**dadurch gekennzeichnet,**
**dass** mehrere zweidimensionale Vakuumisolationspaneele bereitgestellt und nebeneinander angeordnet werden und dass benachbarte Vakuumpaneele an gemeinsamen Seitenkanten miteinander verbunden werden.

10. Verfahren nach Anspruch 9, **dadurch gekennzeichnet, dass** die Vakuumpaneele im zumindest teilweise miteinander verbundenen Zustand entlang der verbundenen Seitenkanten zum dem dreidimensionalen Verbund gefaltet werden.
